(19) 

Europäisches
Patentamt
European
Patent Office
Office européen
des brevets

(11) **EP 4 518 492 A1**

(12) **EUROPEAN PATENT APPLICATION**
published in accordance with Art. 153(4) EPC

(43) Date of publication:
**05.03.2025 Bulletin 2025/10**

(21) Application number: **23795406.0**

(22) Date of filing: **25.04.2023**

(51) International Patent Classification (IPC):
*H04W 72/04* (2023.01)    *H04W 72/40* (2023.01)

(52) Cooperative Patent Classification (CPC):
**H04L 5/00; H04W 72/04; H04W 72/0446;
H04W 72/0453; H04W 72/20; H04W 72/40**

(86) International application number:
**PCT/CN2023/090580**

(87) International publication number:
**WO 2023/207974 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022 CN 202210477709**

(71) Applicant: **Sharp Kabushiki Kaisha
Sakai City, Osaka 590-8522 (JP)**

(72) Inventors:
• **ZHAO, Yinan
Pudong, Shanghai 201206 (CN)**
• **LIU, Renmao
Pudong, Shanghai 201206 (CN)**
• **LUO, Chao
Pudong, Shanghai 201206 (CN)**

(74) Representative: **Müller Hoffmann & Partner
Patentanwälte mbB
St.-Martin-Straße 58
81541 München (DE)**

(54) **METHOD EXECUTED BY USER EQUIPMENT, AND USER EQUIPMENT**

(57) A method performed by user equipment, and user equipment. The method performed by user equipment includes: receiving SCI; and determining, from a resource pool, one or more sub-channels for a PSSCH transmission associated with the SCI , wherein the resource pool is associated with $N^{RBset}_{RP,u}$ consecutive RB sets and $N^{INT}_{RP,u}$ consecutive interlaces, and in the resource pool, each sub-channel is mapped to one RB set among the $N^{RBset}_{RP,u}$ consecutive RB sets and $N^{INT}_{RP,u,SC}$ consecutive interlaces among the $N^{INT}_{RP,u}$ consecutive interlaces, and among all sub-channels mapped to one RB set, starting from a lowest indexed interlace among the $N^{INT}_{RP,u}$ consecutive interlaces, each sub-channel is sequentially mapped to the next $N^{INT}_{RP,u,SC}$ consecutive interlaces among the $N^{INT}_{RP,u}$ consecutive interlaces in ascending order of interlace indexes, wherein $N^{RPset}_{RP,u}$, $N^{INT}_{RP,u}$, and $N^{INT}_{RP,u,SC}$ each correspond to a configured or pre-configured parameter.

```
┌─────────────────────────────────────┐
│            Receive SCI               │──⌒ S101
└─────────────────────────────────────┘
                  │
                  ▼
┌─────────────────────────────────────┐
│  Determine one or more sub-channels  │──⌒ S103
│  corresponding to a PSSCH transmission│
│  associated with the SCI in a        │
│  frequency domain                    │
└─────────────────────────────────────┘
                  │
                  ▼
┌─────────────────────────────────────┐
│ Determine one or more interlaces     │──⌒ S105
│ and/or one or more RB sets           │
│ respectively corresponding to the    │
│ one or more sub-channels             │
└─────────────────────────────────────┘
                  │
                  ▼
┌─────────────────────────────────────┐
│ Determine one or more RBs            │──⌒ S107
│ respectively corresponding to the    │
│ one or more sub-channels             │
└─────────────────────────────────────┘
```

FIG. 1

EP 4 518 492 A1

## Description

### TECHNICAL FIELD

The present disclosure relates to a method performed by user equipment, and user equipment.

### BACKGROUND

In a wireless communication system, UEs (user equipment) can perform sidelink (SL) communication with each other. The SL communication may include general device-to-device (D2D) communication, vehicle-to-vehicle (V2V) communication, vehicle-to-everything (V2X) communication, and the like.

In order to support SL communication on an unlicensed spectrum, a series of issues need to be solved, such as channel access mechanisms and/or the design of physical layer channel structures and/or physical layer procedures and /or adaptations for SL communication, etc.

Prior Art Documents

Non-Patent Documents

Non-Patent Document 1: RP-152293, New WI proposal: Support for V2V services based on LTE sidelink, 3GPP TSG RAN Meeting#70
Non-Patent Document 2: RP-170798, New WID on 3GPP V2X Phase 2, 3GPP TSG RAN Meeting#75
Non-Patent Document 3: RP-170855, New WID on New Radio Access Technology, 3GPP TSG RAN Meeting#75
Non-Patent Document 4: RP-190766, New WID on 5G V2X with NR sidelink, 3GPP TSG RAN Meeting#83
Non-Patent Document 5: RP-201385, WID revision: NR sidelink enhancement, 3GPP TSG RAN Meeting#88e
Non-Patent Document 6: RP-213678, New WID on NR sidelink evolution, 3GPP TSG RAN Meeting#94e

### SUMMARY

In order to solve at least part of the aforementioned issues, provided in the present disclosure are a method performed by user equipment, and user equipment. The mapping of sub-channels to interlaces and RB sets is flexibly determined, thereby maintaining compatibility with a sub-channel-based resource allocation mode in a licensed spectrum and reducing the difficulty of UE implementation, while meeting the restriction on OCB in an unlicensed spectrum.

According to the present disclosure, provided is a method performed by user equipment, characterized by comprising: receiving SCI; and determining one or more sub-channels corresponding to a PSSCH transmission associated with the SCI in a frequency domain; and mapping each sub-channel to one or more interlace sets and one or more sets of RB sets, and mapping the one or more interlace sets and the one or more sets of RB sets corresponding to each sub-channel to one or more RBs. The SCI indicates that the method for mapping each sub-channel to the interlace sets and the sets of RB sets is either "first in ascending order of interlace indexes, and then in ascending order of RB set indexes" or "first in ascending order of RB set indexes, and then in ascending order of interlace indexes".

Furthermore, according to the present disclosure, provided is user equipment, comprising: a processor; and a memory, having instructions stored therein, wherein the instructions, when run by the processor, perform the above method.

Therefore, the present disclosure provides a method, in which the mapping of sub-channels to interlaces and RB sets is flexibly determined, thereby maintaining compatibility with a sub-channel-based resource allocation mode in a licensed spectrum and reducing the difficulty of UE implementation, while meeting the restriction on OCB in an unlicensed spectrum.

### BRIEF DESCRIPTION OF THE DRAWINGS

The above-mentioned and other features of the present disclosure will become more apparent through the following detailed description with reference to the accompanying drawings, wherein:

FIG. 1 shows a flowchart corresponding to a method performed by user equipment according to Embodiment 1 of the present disclosure.
FIG. 2 is a block diagram of user equipment (UE) according to the present disclosure.

**DETAILED DESCRIPTION**

The following describes the present disclosure in detail with reference to the accompanying drawings and specific embodiments. It should be noted that the present disclosure should not be limited to the specific embodiments described below. In addition, for simplicity, detailed description of the prior art not directly related to the present disclosure is omitted to prevent confusion in understanding the present disclosure.

In the following description, 5G (or referred to as "New Radio" (NR) or 5G NR) wireless communication system specifications and later evolved versions thereof (e.g., 5G Advanced) formulated by the 3rd Generation Partnership Project (3GPP) are used as exemplary application environments to specifically describe a plurality of embodiments according to the present disclosure. However, it is to be noted that the present disclosure is not limited to the following embodiments, but is applicable to many other wireless communication systems, such as wireless communication systems later than 5G, or such as 4G mobile communication systems earlier than 5G, e.g., Long Term Evolution (LTE), LTE-Advanced, LTE-Advanced Pro, etc.

The terms given in the present disclosure may be named differently in different wireless communication systems, but unified terms are used in the present disclosure. When applied to a specific system, the terms may be replaced with terms used in the corresponding system.

Unless otherwise specified, in all embodiments and implementations of the present disclosure:

- "Higher layer(s)" or "upper layer(s)" may refer to one or more protocol layers or protocol sub-layers above a given reference protocol layer or reference protocol sub-layer (e.g., a physical layer) in a given protocol stack. For example, for a physical layer, a "higher layer" may refer to a Medium Access Control (MAC) layer, a Radio Link Control (RLC) layer, a Packet Data Convergence Protocol (PDCP) layer, a PC5 Radio Resource Control (RRC) layer, a PC5-S layer, an RRC layer, a Vehicle-to-everything (V2X) layer, an application layer, a V2X application layer, or the like. Unless otherwise specified, the reference protocol layer refers to a physical layer.
- "Configuration" may include configuration performed in a higher layer protocol via signaling. For example, configuration is performed for the UE via RRC signaling transmitted from a base station to the UE. As another example, configuration is performed for the UE via PC5-RRC signaling transmitted from one UE to another UE.
- "Configuration" may include "pre-configuration", and pre-configuration is performed in a higher layer protocol. Specifically, for example, configuration information is pre-configured (e.g., pre-configured according to the specifications of the higher layer protocol) in a specific storage location in the UE, or pre-configured (e.g., pre-configured according to the specifications of the higher layer protocol) in a specific storage location that can be accessed by the UE.
- A resource may correspond to one or more parameters in the time domain (e.g., a starting symbol of the resource, or a starting slot of the resource, or the number of symbols occupied by the resource, or the number of slots occupied by the resource, or the symbol where the resource is located (when the resource occupies only one symbol), or the slot where the resource is located (when the resource occupies only one slot)); and/or one or more parameters in the frequency domain (e.g., a starting sub-channel of the resource, or a starting resource block (RB) of the resource, or a starting subcarrier of the resource, or the number of sub-channels occupied by the resource, or the number of RBs occupied by the resource, or the number of subcarriers occupied by the resource); and/or one or more parameters in the code domain (e.g., a cyclic shift value corresponding to the resource or a corresponding cyclic shift index, or a cyclic shift pair value corresponding to the resource or a corresponding cyclic shift pair index); and/or one or more parameters in the spatial domain (e.g., a layer corresponding to the resource, or referred to as a Multiple Input Multiple Output (MIMO) layer).
- An RB may refer to a virtual resource block (VRB), or a physical resource block (PRB), or a common resource block (CRB), or an interlaced resource block (IRB).
- "Number" may be replaced with "index". For example, the number of an RB may also be referred to as the index of the RB. As another example, "numbering an RB as 0" may also be expressed as "indexing an RB as 0". Where applicable, an object (e.g., an RB, a slot, a cyclic shift, etc.) may be represented by the index thereof. For example, a CRB indexed as 0 may be referred to as CRB 0.

NR technology is applicable to both a licensed spectrum (e.g., 2010 MHz to 2025 MHz) and an unlicensed spectrum (e.g., part or all of 5150 MHz to 5925 MHz, part or all of 5925 MHz to 7125 MHz, part or all of 5925 MHz to 6425 MHz, and so on). When operating in an unlicensed spectrum, a communication node (or referred to as a "node", e.g., a base station or UE) may perform a channel access procedure including, for example, assessing whether a transmission operation can be performed on one or more channels, and the assessment operation may be referred to as clear channel assessment (CCA). Such a mechanism of performing CCA before using a channel may be referred to as Listen Before Talk (LBT).

For an unlicensed spectrum, in the channel access procedure, a "channel" may refer to a carrier consisting of consecutive resource blocks (RBs) or a part of a carrier. For example, a channel may correspond to a 20 MHz bandwidth carrier, or may correspond to the lower 20 MHz of a 40 MHz bandwidth carrier.

For an unlicensed spectrum, a set of available resource blocks in a channel may be referred to as an "RB set". In a carrier (e.g. denoted as c), there may be $N_C^{RBset}$ $(N_C^{RBset} \geq 1)$ RB sets respectively denoted as, for example, $rs_0$, $rs_1$, ......, $rs_{N_C^{RBset}-1}$. For $i \in \{0,1,...,N_C^{RBset}-1\}$, the lowest indexed common resource block (CRB) and the highest indexed CRB of $rs_i$ may be respectively denoted as $N_i^{RS,start}$ and $N_i^{RS,end}$. The number of RBs of $rs_i$ may be denoted as $N_i^{RS,size}$. $N_i^{RS,size}$ may be equal to $N_i^{RS,end} - N_i^{RS,start} + 1$. In addition, optionally, $N_C^{GB} = N_C^{RBset} - 1$ guard bands (or referred to as "intra-cell guard bands") for separating the $N_C^{RBset}$ RB sets may be present in the carrier, and are respectively denoted as, for example, $gb_0$, $gb_1$, ......, $gb_{N_C^{GB}-1}$. For $j \in \{0,1,...,N_C^{GB}-1\}$, the lowest indexed CRB and the highest indexed CRB of $gb_j$ may be respectively denoted as $N_j^{GB,start}$ and $N_j^{GB,end}$. The number of RBs of $gb_j$ may be denoted as $N_j^{GB,size}$. $N_j^{GB,size}$ may be equal to $N_j^{GB,end} - N_j^{GB,start} + 1$, and $gb_j$ may be used to separate the RB set $rs_j$ and the RB set $rs_{j+1}$. For example, in a 40 MHz bandwidth carrier, for a 15 kHz SCS, there may be 216 consecutive RBs (e.g., CRB indexes thereof are respectively denoted as 0, 1, ..., 215), and the 216 RBs may be divided into three subsets, each corresponding to one RB set

$$rs_0 \, (N_0^{RS,start} = 0, \; N_0^{RS,end} = 104, \; N_0^{RS,size} = 105)$$ , one guard band

$$gb_0 \, (N_0^{GB,start} = 105, \; N_0^{GB,end} = 110, \; N_0^{GB,size} = 6)$$ , and one RB set

$$rs_1 \, (N_1^{RS,start} = 111, \; N_1^{RS,end} = 215, \; N_1^{RS,size} = 105)$$ .

A set consisting of the $N_C^{RBset}$ RB sets may be denoted as $RS_C = \{rs_0, rs_1, ..., rs_{N_C^{RBset}-1}\}$. For $i \in \{0,1,...,N_C^{RBset}-2\}$, there may be zero or one guard band between two adjacent RB sets ($rs_i$ and $rs_{i+1}$). A set consisting of the $N_C^{GB}$ guard bands may be denoted as $GB_C = \{gb_0, gb_1, ..., gb_{N_C^{GB}-1}\}$. For $j \in \{0,1,...,N_C^{GB}-1\}$, if $gb_j$ is an empty set, it may be considered that no corresponding guard band is present. For $j = 0,1,...,N_C^{GB}-1$, if each $gb_j$ is an empty set, it may be considered that there is no guard band between the RB sets of the carrier c. $N_C^{BWP}$ $(N_C^{BWP} \geq 1)$ bandwidth parts (BWPs) may be configured in the carrier c, and are respectively denoted as, for example, $bwp_0$, $bwp_1$, ......, $bwp_{N_C^{BWP}-1}$. For $k \in \{0,1,...,N_C^{BWP}-1\}$, $bwp_k$ may correspond to $N_{BWP,k}^{RBset}$ $(N_{BWP,k}^{RBset} \leq N_C^{RBset})$ RB sets respectively denoted as, for example, $rs_{a_{k,0}}$, $rs_{a_{k,1}}$, ......, $rs_{a_{k,N_{BWP,k}^{RBset}-1}}$. For $l \in \{0,1,...,N_{BWP,k}^{RBset}-1\}$, $rs_{a_{k,l}}$ is an element in the set $RS_C$, and $a_{k,0} < a_{k,1} < \cdots < a_{k,N_{BWP,k}^{RBset}-1}$. The lowest indexed CRB (e.g., denoted as $N_{BWP,k}^{start}$) of $bwp_k$ may be equal to $N_{a_{k,0}}^{RS,start}$, and the number of RBs of $bwp_k$ (e.g., denoted as $N_{BWP,k}^{size}$) may be equal to $N_{a_{k,N_{BWP,k}^{RBset}-1}}^{RS,end} - N_{a_{k,0}}^{RS,start} + 1$. The $N_{BWP,k}^{RBset}$ RB sets may be $N_{BWP,k}^{RBset}$ consecutive RB sets. For example, for $l \in \{1,...,N_{BWP,k}^{RBset}-1\}$, $a_{k,l} = a_{k,0} + l$. For convenience, when no ambiguity is caused (e.g., in an operation involving only one BWP), $N_{BWP,k}^{RBset}$ may be denoted as $N_{BWP}^{RBset}$, and $rs_{a_{k,0}}$, $rs_{a_{k,1}}$, ......, $rs_{a_{k,N_{BWP,k}^{RBset}-1}}$ may be respectively denoted as $rs_{a_0}$, $rs_{a_1}$, ......, $rs_{a_{N_{BWP}^{RBset}-1}}$. A set consisting of the $N_{BWP}^{RBset}$ RB sets may be denoted as

$RS_{BWP} = \{rs_{a_0}, rs_{a_1}, \ldots, rs_{a_{N_{BWP}^{RBset}-1}}\}$. The set $RS_{BWP}$ may be equal to the set $RS_C$ or equal to a subset of the set $RS_C$.

A communication node may perform an LBT operation on one channel, or may perform LBT operations respectively on a plurality of channels. A result of each LBT operation may be "success" (e.g., indicating that the corresponding channel is not occupied) or "failure" (e.g., indicating that the corresponding channel is occupied).

A channel on an unlicensed spectrum may be referred to as a shared spectrum channel, and an operation performed thereon may be referred to as an "operation with shared spectrum channel access". In contrast, an operation on a channel on a licensed spectrum may be referred to as an "operation without shared spectrum channel access".

In the operation with shared spectrum channel access, in order to ensure fair channel sharing between different communication nodes, a certain restriction may be imposed on the power spectral density (PSD) and/or occupied channel bandwidth (OCB) of signal transmission. For example, the maximum PSD cannot exceed 10 dBm/MHz. As another example, when a channel is used, the bandwidth containing 99% of the transmission power must be greater than or equal to a certain percentage (e.g., 80%) of the nominal channel bandwidth. The restriction may be made and enforced by regulatory authorities.

To meet the restriction on OCB, one radio transmission may correspond to one or more "interlaces". For example, $M_{INT}(M_{INT} \geq 1)$ interlaces may be defined, and the corresponding interlace set is $I_{ALL} = \{int_0, int_1, \ldots, int_{M_{INT}-1}\}$. For $m \in \{0, 1, \ldots, M_{INT}-1\}$, the interlace $int_m$ may correspond to the CRB set $\{m, M_{INT}+m, 2M_{INT}+m, 3M_{INT}+m, \ldots\}$. $M_{INT}$ may be a predefined or configured value. The value of $M_{INT}$ may be related to a subcarrier spacing configuration $\mu$ (e.g., for $\mu = 0$, $M_{INT} = 10$, and for $\mu = 1$, $M_{INT} = 5$). A set consisting of one or more RBs occupied by one radio transmission may be related to one or more interlaces and one or more RB sets.

An RB in an interlace may be referred to as an IRB. For example, in $bwp_k$, the indexes of IRBs in the interlace $int_m$ may be sequentially denoted as $N_{m,0}^{IRB} = 0$, $N_{m,1}^{IRB} = 1, \ldots$ in ascending order of frequencies. The corresponding CRB indexes may be sequentially denoted as $N_{m,0}^{CRB}$, $N_{m,1}^{CRB}, \ldots$ The corresponding PRB indexes may be sequentially denoted as $N_{m,0}^{PRB}$, $N_{m,1}^{PRB}, \ldots$

The relationship between the IRB index $N_{m,z}^{IRB}$ ($z = 0, 1, \ldots$) and the corresponding CRB index $N_{m,z}^{CRB}$ may be denoted as $N_{m,z}^{CRB} = f_{IRB}^{CRB}(m, N_{m,z}^{IRB})$, where $f_{IRB}^{CRB}(m, N_{m,z}^{IRB})$ may be defined as:

$$f_{IRB}^{CRB}(m, N_{m,z}^{IRB}) = M_{INT} \cdot N_{m,z}^{IRB} + N_{BWP,k}^{start} + \left( (m - N_{BWP,k}^{start}) \bmod M_{INT} \right).$$

The relationship between the IRB index $N_{m,z}^{IRB}$ ($z = 0, 1, \ldots$) and the corresponding PRB index $N_{m,z}^{PRB}$ may be denoted as $N_{m,z}^{PRB} = f_{IRB}^{PRB}(m, N_{m,z}^{IRB})$, where $f_{IRB}^{PRB}(m, N_{m,z}^{IRB})$ may be defined as:

$$f_{IRB}^{PRB}(m, N_{m,z}^{IRB}) = M_{INT} \cdot N_{m,z}^{IRB} + \left( (m - N_{BWP,k}^{start}) \bmod M_{INT} \right).$$

$I_{MAP} = \{int_{m_0}, int_{m_1}, \ldots, int_{m_{N_{MAP}^{INT}-1}}\}$ is denoted as a subset of the set $I_{ALL}$, where $N_{MAP}^{INT} \in \{1, 2, \ldots, M_{INT}\}$; $int_{m_0}, int_{m_1}, \ldots, int_{m_{N_{MAP}^{INT}-1}}$ may be consecutive interlaces (e.g., for $l \in \{1, \ldots, N_{MAP}^{INT}-1\}$, $m_l = m_0 + l$) or non-consecutive interlaces. $RS_{MAP} = \{rs_{i_0}, rs_{i_1}, \ldots, rs_{i_{N_{MAP}^{RBset}-1}}\}$ is denoted a subset of the set $RS_{BWP}$, where $N_{MAP}^{RBset} \in \{1, 2, \ldots, N_{BWP,k}^{RBset}\}$; $rs_{i_0}, rs_{i_1}, \ldots, rs_{i_{N_{MAP}^{RBset}-1}}$ may be consecutive RB sets (e.g., for $l \in \{1, \ldots, N_{MAP}^{RBset}-1\}$, $i_l = i_0 + l$) or non-consecutive RB sets. $f_{MAP}^{RB}(I_{MAP}, RS_{MAP})$ may represent a mapping of the set $I_{MAP}$ and the set $RS_{MAP}$ to a set including one or more RBs. $f_{MAP}^{RB}(I_{MAP}, RS_{MAP})$ may be defined as one of the following:

- $RB_{MAP}^{RS}$.

- $RB_{MAP}^{RS} \cap RB_{MAP}^{INT}$ (i.e., the intersection of $RB_{MAP}^{RS}$ and $RB_{MAP}^{INT}$).

- $RB_{MAP}^{RS,GB}$ .

- $RB_{MAP}^{RS,GB} \cap RB_{MAP}^{INT}$ (i.e., the intersection of $RB_{MAP}^{RS,GB}$ and $RB_{MAP}^{INT}$).

$RB_{MAP}^{RS}$ is all RBs in the union of all RB sets in the set $RS_{MAP}$ (or referred to as "a set consisting of all RBs in the union of all RB sets in the set $RS_{MAP}$"). $RB_{MAP}^{INT}$ is all RBs corresponding to all interlaces in the set $I_{MAP}$ (or referred to as "a set consisting of all RBs corresponding to all interlaces in the set $I_{MAP}$"). $RB_{MAP}^{RS,GB}$ is the union of $RB_{MAP}^{RS}$ and $RB_{MAP}^{GB}$, where $RB_{MAP}^{GB}$ is all RBs in the union of all guard bands (if any) between all RB sets in the set $RS_{MAP}$ (or referred to as "a set consisting of all RBs in the union of all guard bands (if any) between all RB sets in the set $RS_{MAP}$").

For example, if $M_{INT} = 5$, $I_{MAP} = \{int_0, int_1\}$, where the CRBs corresponding to $int_0$ are {10, 15, 20, ...}, and the CRBs corresponding to $int_1$ are {11, 16, 21, ...}, and $RS_{MAP} = \{rs_0, rs_1\}$, where the CRBs corresponding to $rs_0$ are {10, 11, 12, ..., 59}, and the CRBs corresponding to $rs_1$ are {66, 67, 68, ..., 115}, then

- $RB_{MAP}^{RS} = \{10, 11, 12, \ldots, 59\} \cup \{66, 67, 68, \ldots, 115\} =$ {10, 11, 12, ..., 59, 66, 67, 68, ..., 115}.

- $RB_{MAP}^{INT} = \{10, 15, 20, \ldots\} \cup \{11, 16, 21, \ldots\} = \{10, 11, 15, 16, 20, 21, \ldots\}$ .

- $RB_{MAP}^{GB} = \{60, 61, 62, 63, 64, 65\}$ .

- $RB_{MAP}^{RS,GB} = \{10, 11, 12, \ldots, 59, 66, 67, 68, \ldots, 115\} \cup \{60, 61, 62, 63, 64, 65\} =$ {10, 11, 12, ..., 115}.

Correspondingly, $f_{MAP}^{RB}(I_{MAP}, RS_{MAP})$ may be equal to one of the following:

- $RB_{MAP}^{RS}$ , , i.e., {10, 11, 12, ..., 59, 66, 67, 68, ..., 115}.

- $RB_{MAP}^{RS} \cap RB_{MAP}^{INT}$ , i.e., {10, 11, 15, 16, 20, 21, ..., 55, 56, 66, 70, 71, 75, 76, 80, 81, ..., 110, 111, 115}.

- $RB_{MAP}^{RS,GB}$ , i.e., {10, 11, 12, ..., 115}.

- $RB_{MAP}^{RS,GB} \cap RB_{MAP}^{INT}$ , i.e., {10, 11, 15, 16, 20, 21, ..., 110, 111, 115}.

For different uses (e.g., resource mappings for different channels or signals), the definition of $f_{MAP}^{RB}(I_{MAP}, RS_{MAP})$ may be different.

The present disclosure describes resource allocation and/or mapping mechanisms in the time domain and/or the frequency domain and/or the code domain and/or the spatial domain that may be used for channels and/or signals for SL communication on a licensed spectrum and/or an unlicensed spectrum.

In SL communication, one or more resource pools may be configured in one BWP (e.g., referred to as "SL BWP"). For example, for $k \in \{0, 1, \ldots, N_C^{BWP} - 1\}$, $N_{BWP,k}^{RP}$ ( $N_{BWP,k}^{RP} \geq 1$ ) resource pools (e.g., respectively denoted as $rp_0^{BWP,k}$ , $rp_1^{BWP,k}$ , ..., $rp_{N_{BWP,k}^{RP}-1}^{BWP,k}$ ) may be configured in $bwp_k$. For convenience, when no ambiguity is caused (e.g., in an operation involving only one BWP), $N_{BWP,k}^{RP}$ may be denoted as $N_{BWP}^{RP}$ , and $rp_0^{BWP,k}$ , $rp_1^{BWP,k}$ , ..., $rp_{N_{BWP,k}^{RP}-1}^{BWP,k}$ may be respectively denoted as $rp_0, rp_1, \ldots, rp_{N_{BWP}^{RP}-1}$ . Hereinafter, unless otherwise specified, it is assumed that $u \in \{0, 1, \ldots, N_{BWP}^{RP} - 1\}$ .

In SL communication, resources for some SL transmissions (e.g., PSCCH transmissions and PSSCH transmissions) may be in one resource pool, while other SL transmissions (e.g., S-SSB transmissions) may not be in any resource pool.

In the time domain, a resource pool $rp_u$ may correspond to one slot set denoted as, for example, $T_{RP,u} = \{t'^{RP,u}_0, t'^{RP,u}_1, \dots, t'^{RP,u}_{T'_{max}-1}\}$. The slots in the set $T_{RP,u}$ may be some or all slots in a system frame number (SFN) or direct frame number (DFN) period (e.g., 10240 milliseconds).

In the frequency domain, a starting RB (e.g., represented by a corresponding PRB index denoted as, e.g., $N^{start}_{RP,u,RB}$) may be configured in the resource pool $rp_u$.

For an unlicensed spectrum, the resource pool $rp_u$ may be associated with $N^{INT}_{RP,u}$ ($N^{INT}_{RP,u} \geq 1$) interlaces, respectively denoted as, for example, $int_{b_0}$, $int_{b_1}$, ..., $int_{b_{N^{INT}_{RP,u}-1}}$, where $b_0 < b_1 < \cdots < b_{N^{INT}_{RP,u}-1}$. The $N^{INT}_{RP,u}$ interlaces may be consecutive interlaces (e.g., for $l \in \{1, \dots, N^{INT}_{RP,u} - 1\}$, $b_l = b_0 + l$) or non-consecutive interlaces. A set consisting of the $N^{INT}_{RP,u}$ interlaces may be denoted as $I_{RP,u} = \{int_{b_0}, int_{b_1}, \dots, int_{b_{N^{INT}_{RP,u}-1}}\}$. The set $I_{RP,u}$ may be equal to the set $I_{ALL}$ or equal to a subset of the set $I_{ALL}$. The set $I_{RP,u}$ may be a predefined set (e.g., $I_{RP,u} = I_{ALL}$), or may be determined according to one or more predefined parameters and/or one or more configured parameters and/or one or more fields in the SCI. For example, it is possible to indicate, via a "resource pool interlace bitmap" parameter, which element (elements) of the set $I_{ALL}$ is (are) in the set $I_{RP,u}$. Specifically, for example, the number of bits of the resource pool interlace bitmap parameter may be equal to the number of elements in the set $I_{ALL}$, and each bit of the resource pool interlace bitmap parameter may respectively correspond to one element in the set $I_{ALL}$ (for example, the most significant bit to the least significant bit sequentially correspond to elements indexed as 0, 1, ..., $M_{INT}$-1 in the set $I_{ALL}$, or the least significant bit to the most significant bit sequentially correspond to elements indexed as 0, 1, ..., $M_{INT}$-1 in the set $I_{ALL}$. The value of 1 of a bit indicates that the corresponding element in the set $I_{ALL}$ is in the set $I_{RP,u}$, and the value of 0 indicates that the corresponding element in the set $I_{ALL}$ is not in the set $I_{RP,u}$. Correspondingly, $N^{INT}_{RP,u}$ is equal to the number of bits having the value of 1 in the resource pool interlace bitmap parameter. As another example, the $N^{INT}_{RP,u}$ interlaces are $N^{INT}_{RP,u}$ consecutive interlaces, and correspondingly, the set $I_{RP,u}$ may be determined using $b_0$ and $N^{INT}_{RP,u}$. $N^{INT}_{RP,u}$ may be a predefined or configured value, or may be indicated by SCI. $b_0$ may be a predefined or configured value, or may be indicated by the SCI, or may be determined by the starting RB ($N^{start}_{RP,u,RB}$) of the resource pool $rp_u$. For example, $int_{b_0}$ is the interlace where the starting RB of the resource pool $rp_u$ is located. As another example, the indexes ($b_0$, $b_1$, ..., $b_{N^{INT}_{RP,u}-1}$) of all interlaces in the set $I_{RP,u}$ may be explicitly configured. Correspondingly, $N^{INT}_{RP,u}$ is equal to the number of the configured interlace indexes.

For an unlicensed spectrum, the resource pool $rp_u$ may be associated with $N^{RBset}_{RP,u}$ ($N^{RBset}_{RP,u} \geq 1$) RB sets, respectively denoted as, for example, $rs_{c_0}$, $rs_{c_1}$, ..., $rs_{c_{N^{RBset}_{RP,u}-1}}$, where $c_0 < c_1 < \cdots < c_{N^{RBset}_{RP,u}-1}$. The $N^{RBset}_{RP,u}$ RB sets may be consecutive RB sets (e.g., for $l \in \{1, \dots, N^{RBset}_{RP,u} - 1\}$, $c_l = c_0 + l$) or non-consecutive RB sets. A set consisting of the $N^{RBset}_{RP,u}$ RB sets may be denoted as $RS_{RP,u} = \{rs_{c_0}, rs_{c_1}, \dots, rs_{c_{N^{RBset}_{RP,u}-1}}\}$. The set $RS_{RP,u}$ may be equal to the set $RS_{BWP}$ or equal to a subset of the set $RS_{BWP}$. The set $RS_{RP,u}$ may be a predefined set (e.g., $RS_{RP,u} = RS_{BWP}$), or may be determined according to one or more predefined parameters and/or one or more configured parameters and/or one or more fields in the SCI. For example, it is possible to indicate, via a "resource pool RB set bitmap" parameter, which element (elements) of the set (i.e., the set $RS_{BWP}$) among all RB sets in the corresponding BWP is (are) in the set $RS_{RP,u}$. Specifically, for example, the number of bits of the resource pool RB set bitmap parameter may be equal to the number of elements in the set $RS_{BWP}$, and each bit of the resource pool RB set bitmap parameter may respectively correspond to one element in the set $RS_{BWP}$ (for example, the most significant bit to the least significant bit sequentially correspond to elements indexed as $0, 1, \dots, N^{RBset}_{BWP} - 1$ in the set $RS_{BWP}$, or the least significant bit to the most significant bit sequentially correspond to elements indexed as $0, 1, \dots, N^{RBset}_{BWP} - 1$ in the set $RS_{BWP}$. The value of 1 of a bit indicates that the corresponding element in the set $RS_{BWP}$ is in the set $RS_{RP,u}$, and the value of 0 indicates that the corresponding element in the set $RS_{BWP}$ is not in the set $RS_{RP,u}$. Correspondingly, $N_{RP,u}^{RBset}$ is equal to the number of bits having the value of 1 in the resource pool RB set bitmap parameter. As another example, the $N_{RP,u}^{RBset}$ RB sets are $N_{RP,u}^{RBset}$ consecutive RB sets, and correspondingly, the set $RS_{RP,u}$ may be determined using $c_0$ and $N_{RP,u}^{RBset}$. $N_{RP,u}^{RBset}$ may be a predefined or configured value, or may be indicated by the SCI. $c_0$ may be a predefined or configured value, or may be indicated by the SCI, or may be determined by the starting RB ( $N_{RP,u,RB}^{start}$ ) of the resource pool $rp_u$. For example, $rs_{c_0}$ is the RB set where the starting RB of the resource pool $rp_u$ is located. As another example, the indexes ( $c_0, c_1, ..., c_{N_{RP,u}^{RBset}-1}$ ) of all RB sets in the set $RS_{RP,u}$ may be explicitly configured. Correspondingly, $N_{RP,u}^{RBset}$ is equal to the number of the configured RB set indexes.

The resource pool $rp_u$ may include $N_{RP,u}^{SC}$ $(N_{RP,u}^{SC} \geq 1)$ sub-channels (e.g., respectively denoted as $sc_0^{RP,u}$, $sc_1^{RP,u}$, ..., $sc_{N_{RP,u}^{SC}-1}^{RP,u}$ ). For $n \in \{0,1,...,N_{RP,u}^{SC}-1\}$, the sub-chanel $sc_n^{RP,u}$ may include $N_{RP,u,SC,n}^{RB}$ $(N_{RP,u,SC,n}^{RB} \geq 1)$ RBs. $N_{RP,u,SC,n}^{RB}$ may be a value independent of the sub-channel index $n$ (in this case, $N_{RP,u,SC,n}^{RB}$ may be denoted as $N_{RP,u,SC}^{RB}$, and $N_{RP,u,SC}^{RB}$ may be a predefined or configured value, e.g., $N_{RP,u,SC}^{RB} = 10$ or $N_{RP,u,SC}^{RB} = 15$ ), or may be a value related to the sub-channel index $n$. The $N_{RP,u,SC,n}^{RB}$ RBs may be consecutive PRBs or non-consecutive PRBs. A set consisting of the $N_{RP,u,SC,n}^{RB}$ RBs may be denoted as $RB_{RP,u,SC,n}$. Hereinafter, unless otherwise specified, it is assumed that $n \in \{0,1,...,N_{RP,u}^{SC}-1\}$.

For an unlicensed spectrum, the sub-channel $sc_n^{RP,u}$ may correspond to $N_{RP,u,SC}^{INT}$ $(N_{RP,u,SC}^{INT} \geq 1)$ interlaces and $N_{RP,u,SC}^{RBset}$ $(N_{RP,u,SC}^{RBset} \geq 1)$ RB sets, where $N_{RP,u,SC}^{INT}$ may be a predefined or configured value, or may be indicated in the SCI, such as $N_{RP,u,SC}^{INT} = 1$, or such as $N_{RP,u,SC}^{INT} = 2$. The $N_{RP,u,SC}^{INT}$ interlaces may be consecutive interlaces or non-consecutive interlaces. A set consisting of the $N_{RP,u,SC}^{INT}$ interlaces may be denoted as $I_{RP,u,SC,n}^{INT}$. $N_{RP,u,SC}^{RBset}$ may be a predefined or configured value, or may be indicated in the SCI, such as $N_{RP,u,SC}^{RBset} = 1$, or such as $N_{RP,u,SC}^{RBset} = 2$. The $N_{RP,u,SC}^{RBset}$ RB sets may be consecutive RB sets or non-consecutive RB sets. A set consisting of the $N_{RP,u,SC}^{RBset}$ RB sets may be denoted as $RS_{RP,u,SC,n}^{RBset}$.

The set $RB_{RP,u,SC,n}$ may be equal to $f_{MAP}^{RB}\left(I_{RP,u,SC,n}^{INT}, RS_{RP,u,SC,n}^{RBset}\right)$.

Optionally, the PRB index corresponding to the RB in the set $RB_{RP,u,SC,n}$ is always greater than or equal to the starting RB ( $N_{RP,u,RB}^{start}$ ) of the resource pool $rp_u$. For $n = 0$, first, the set $RB_{RP,u,SC,0}$ is determined as $f_{MAP}^{RB}\left(I_{RP,u,SC,0}^{INT}, RS_{RP,u,SC,0}^{RBset}\right)$, and RBs (if any) with the PRB index less than $N_{RP,u,RB}^{start}$ are then excluded from the set $RB_{RP,u,SC,0}$.

The number ( $N_{RP,u}^{SC}$ ) of sub-channels of the resource pool $rp_u$ may be a predefined or configured value (e.g., $N_{RP,u}^{SC} = 10$ ).

The number ( $N_{RP,u}^{INT}$ ) of interlaces associated with the resource pool $rp_u$ may be an integral multiple of the number ( $N_{RP,u,SC}^{INT}$ ) of interlaces corresponding to each sub-channel in the resource pool $rp_u$.

The number ( $N_{RP,u}^{RBset}$ ) of RB sets associated with the resource pool $rp_u$ may be an integral multiple of the number ( $N_{RP,u,SC}^{RBset}$ ) of RB sets corresponding to each sub-channel in the resource pool $rp_u$.

For an unlicensed spectrum, the number ( $N_{RP,u}^{SC}$ ) of sub-channels of the resource pool $rp_u$ may be determined by the number ( $N_{RP,u}^{INT}$ ) of interlaces associated with the resource pool $rp_u$ and/or the number ( $N_{RP,u}^{RBset}$ ) of RB sets associated with the resource pool $rp_u$ and/or the number ( $N_{RP,u,SC}^{INT}$ ) of interlaces corresponding to each sub-channel in the resource pool $rp_u$ and/or the number ( $N_{RP,u,SC}^{RBset}$ ) of RB sets corresponding to each sub-channel in the resource pool $rp_u$. For example, $N_{RP,u}^{SC} = \left(N_{RP,u}^{INT}/N_{RP,u,SC}^{INT}\right) \cdot \left(N_{RP,u}^{RBset}/N_{RP,u,SC}^{RBset}\right)$ , or $N_{RP,u}^{SC} = \lfloor N_{RP,u}^{INT}/ N_{RP,u,SC}^{INT} \rfloor \cdot \lfloor N_{RP,u}^{INT}/N_{RP,u,SC}^{INT} \rfloor$ , or $N_{RP,u}^{SC} = \left(N_{RP,u}^{INT} \cdot N_{RP,u}^{RBset}\right)/\left(N_{RP,u,SC}^{INT} \cdot N_{RP,u,SC}^{RBset}\right)$ , or $N_{RP,u}^{SC} = \lfloor \left(N_{RP,u}^{INT} \cdot N_{RP,u}^{RBset}\right)/\left(N_{RP,u,SC}^{INT} \cdot N_{RP,u,SC}^{RBset}\right) \rfloor$ .

For an unlicensed spectrum, the number ( $N_{RP,u}^{RBset}$ ) of RB sets associated with the resource pool $rp_u$ may be determined by the number ( $N_{RP,u}^{SC}$ ) of sub-channels of the resource pool $rp_u$ and/or the number ( $N_{RP,u}^{INT}$ ) of interlaces associated with the resource pool $rp_u$ and/or the number ( $N_{RP,u,SC}^{INT}$ ) of interlaces corresponding to each sub-channel in the resource pool $rp_u$ and/or the number ( $N_{RP,u,SC}^{RBset}$ ) of RB sets corresponding to each sub-channel in the resource pool $rp_u$. For example, $N_{RP,u}^{RBset} = \lceil \left(N_{RP,u}^{SC} \cdot N_{RP,u,SC}^{INT} \cdot N_{RP,u,SC}^{RBset}\right)/N_{RP,u}^{INT} \rceil$ , or $N_{RP,u}^{RBset} = \left(N_{RP,u}^{SC} \cdot N_{RP,u,SC}^{INT} \cdot N_{RP,u,SC}^{RBset}\right)/N_{RP,u}^{INT}$ , or $N_{RP,u}^{RBset} = \left(N_{RP,u}^{SC} \cdot N_{RP,u,SC}^{RBset}\right)/\lfloor N_{RP,u}^{INT}/ N_{RP,u,SC}^{INT} \rfloor$ .

The resource pool $rp_u$ may include $N_{RP,u}^{RB}$ ( $N_{RP,u}^{RB} \geq 1$ ) RBs. The $N_{RP,u}^{RB}$ RBs may be consecutive PRBs or non-consecutive PRBs. A set consisting of the $N_{RP,u}^{RB}$ RBs may be denoted as $RB_{RP,u}$.

For a licensed spectrum, the set $RB_{RP,u}$ may be a set consisting of $N_{RP,u}^{SC} \cdot N_{RP,u,SC}^{RB}$ consecutive RBs starting from the starting RB ( $N_{RP,u,RB}^{start}$ ) of the resource pool $rp_u$.

For an unlicensed spectrum, the set $RB_{RP,u}$ may be related to the set $RS_{RP,u}$ and/or the set $I_{RP,u}$. For example, the set $RB_{RP,u}$ may be equal to $f_{MAP}^{RB}\left(I_{RP,u}, RS_{RP,u}\right)$ .

Optionally, the PRB index corresponding to the RB in the set $RB_{RP,u}$ is always greater than or equal to the starting RB ( $N_{RP,u,RB}^{start}$ ) of the resource pool $rp_u$. For example, first, the set $RB_{RP,u}$ is determined as $f_{MAP}^{RB}\left(I_{RP,u}, RS_{RP,u}\right)$ , and RBs (if any) with the PRB index less than $N_{RP,u,RB}^{start}$ are then excluded from the set $RB_{RP,u}$.

For an unlicensed spectrum, the mapping of sub-channels to interlaces and RB sets (i.e., sequentially determining an interlace set and a set of RB sets corresponding to the sub-channels $sc_{p_0}^{RP,u}$, $sc_{p_0+1}^{RP,u}$ , ... and $sc_{p_0+L_0-1}^{RP,u}$ , where $L_0 \in \{1, 2, ..., N_{RP,u}^{SC}\}$ , and $p_0 \in \{0, 1, ..., N_{RP,u}^{SC} - L_0\}$ ) may be a "semi-static" mapping (e.g., the mapping is performed for all sub-channels in the resource pool $rp_u$, i.e., $p_0 = 0$, and $L_0 = N_{RP,u}^{SC}$ ) or a "dynamic" mapping (e.g., the mapping is performed for a dynamically determined sub-channel subset in the resource pool $rp_u$).

Optionally, for an SL transmission (e.g., a PSSCH transmission), whether the mapping of sub-channels to interlaces and RB sets is a semi-static mapping or a dynamic mapping may be determined according to a predefined or configured method, or it is possible to indicate in the SCI whether the mapping of sub-channels to interlaces and RB sets is a semi-static mapping or a dynamic mapping.

The range of the mapping of sub-channels to interlaces and RB sets may be an interlace set $I_{RP,u,MAP}$ and a set of RB sets $RS_{RP,u,MAP}$. $I_{RP,u,MAP}$ may be equal to $I_{RP,u}$ (e.g., when a semi-static mapping is performed), or may be equal to a subset of $I_{RP,u}$ (e.g., when a dynamic mapping is performed). $I_{RP,u,MAP}$ may be determined according to a predefined or configured method, or may be indicated in the SCI. Elements in $I_{RP,u,MAP}$ may be arranged according to the order thereof in $I_{RP,u}$. $RS_{RP,u,MAP}$ may be equal to $RS_{RP,u}$ (e.g., when a semi-static mapping is performed), or may be equal to a subset of $RS_{RP,u}$ (e.g., when a dynamic mapping is performed). $RS_{RP,u,MAP}$ may be determined according to a predefined or configured method, or may be indicated in the SCI. Elements in $RS_{RP,u,MAP}$ may be arranged according to the order thereof in $RS_{RP,u}$.

The number of elements in the interlace set $I_{RP,u,MAP}$ may be an integral multiple of the number ( $N_{RP,u,SC}^{INT}$ ) of interlaces corresponding to each sub-channel in the resource pool $rp_u$.

The number of elements in the set of RB sets $RS_{RP,u,MAP}$ may be an integral multiple of the number ( $N_{RP,u,SC}^{RBset}$ ) of RB sets corresponding to each sub-channel in the resource pool *rpu*.

There may be one or more methods for mapping sub-channels to interlaces and RB sets, such as the mapping method of "first in ascending order of interlace indexes, and then in ascending order of RB set indexes", or such as the mapping method of "first in ascending order of RB set indexes, and then in ascending order of interlace indexes". Optionally, the method for mapping sub-channels to interlaces and RB sets may be determined according to a predefined or configured method, or the mapping method may be indicated in the SCI. For example, the method for mapping sub-channels in the resource pool $rp_u$ to interlaces and RB sets (e.g., "first in ascending order of interlace indexes, and then in ascending order of RB set indexes" or "first in ascending order of RB set indexes, and then in ascending order of interlace indexes") may be determined according to the value of a configured parameter or a field (e.g., referred to as "sub-channel mapping method") in the SCI.

For the resource pool $rp_u$, a termination condition for the mapping of sub-channels to interlaces and RB sets may be one or more of the following (in any combination of "and" or "or"):

- The number of mapped sub-channels is equal to $L_0$.
- All elements in the interlace set $I_{RP,u,MAP}$ have corresponding sub-channels.
- The number of elements having no corresponding sub-channels in the interlace set $I_{RP,u,MAP}$ is less than $N_{RP,u,SC}^{INT}$.
- All elements in the set of RB sets $RS_{RP,u,MAP}$ have corresponding sub-channels.
- The number of elements having no corresponding sub-channels in the set of RB sets $RS_{RP,u,MAP}$ is less than $N_{RP,u,SC}^{RBset}$.

In the semi-static mapping, the termination condition may be related to whether $N_{RP,u}^{SC}$ is configured or not. For example, if $N_{RP,u}^{SC}$ is configured, the termination condition may be "the number of mapped sub-channels is equal to $L_0$". As another example, if $N_{RP,u}^{SC}$ is not configured, the termination condition may be "all elements in the interlace set $I_{RP,u,MAP}$ have corresponding sub-channels, and all elements in the set of RB sets $RS_{RP,u,MAP}$ have corresponding sub-channels".

In the mapping method of "first in ascending order of interlace indexes, and then in ascending order of RB set indexes", the set $RS_{RP,u,MAP}$ may be traversed in an outer loop in ascending order of the indexes of elements in the set (i.e., in the set $RS_{RP,U,MAP}$, $N_{RP,u,SC}^{RBset}$ RB sets are acquired each time in ascending order of the indexes of the elements), and the set $I_{RP,u,MAP}$ may be traversed in an inner loop in ascending order of the indexes of the elements in the set (i.e., in the set $I_{RP,u,MAP}$, $N_{RP,u,SC}^{INT}$ interlaces are acquired each time in ascending order of the indexes of the elements). The sub-channel corresponding to the current $N_{RP,u,SC}^{INT}$ interlaces and the current $N_{RP,u,SC}^{RBset}$ RB sets is indexed as *n* (the corresponding sub-channel is $sc_n^{RP,u}$ ), and the value of *n* is increased by 1. The initial value of *n* is $p_0$. For example, if $M_{INT}$ = 10, $RS_{RP,u,MAP}$ = {$rs_0$, $rs_1$}, $N_{RP,u,SC}^{RBset} = 1$, $I_{RP,u,MAP}$ = {$int_2$, $int_3$, $int_4$}, $N_{RP,u,SC}^{INT} = 1$, $p_0$ = 0, and $L_0$ = 6, then the method for mapping sub-channels to interlaces and RB sets may be expressed as follows:

- the sub-channel $sc_0^{RP,u}$ corresponds to the interlace $int_2$ and the RB set $rs_0$;
- the sub-channel $sc_1^{RP,u}$ corresponds to the interlace $int_3$ and the RB set $rs_0$;
- the sub-channel $sc_2^{RP,u}$ corresponds to the interlace $int_4$ and the RB set $rs_0$;
- the sub-channel $sc_3^{RP,u}$ corresponds to the interlace $int_2$ and the RB set $rs_1$;

- the sub-channel $sc_4^{RP,u}$ corresponds to the interlace $int_3$ and the RB set $rs_1$;

- the sub-channel $sc_5^{RP,u}$ corresponds to the interlace $int_4$ and the RB set $rs_1$.

As another example, if $L_0$ = 4, then in the above example, mapping is performed only for $sc_0^{RP,u}$, $sc_1^{RP,u}$, $sc_2^{RP,u}$ and $sc_3^{RP,u}$.

In the mapping method of "first in ascending order of RB set indexes, and then in ascending order of interlace indexes", the set $I_{RP,u,MAP}$ may be traversed in an outer loop in ascending order of the indexes of elements in the set (i.e., in the set $I_{RP,u,MAP}$, $N_{RP,u,SC}^{INT}$ interlaces are acquired each time in ascending order of the indexes of the elements), and the set $RS_{RP,u,MAP}$ may be traversed in an inner loop in ascending order of the indexes of elements in the set (i.e., in the set $RS_{RP,u,MAP}$, $N_{RP,u,SC}^{RBset}$ RB sets are acquired each time in ascending order of the indexes of the elements). The sub-channel corresponding to the current $N_{RP,u,SC}^{INT}$ interlaces and the current $N_{RP,u,SC}^{RBset}$ RB sets is indexed as $n$ (the corresponding sub-channel is $sc_n^{RP,u}$), and the value of $n$ is increased by 1. The initial value of $n$ is $p_0$. For example, if $M_{INT}$ = 10, $RS_{RP,u,MAP} = \{rs_0, rs_1\}$, $N_{RP,u,SC}^{RBset} = 1$, $I_{RP,u,MAP} = \{int_2, int_3, int_4\}$, $N_{RP,u,SC}^{INT} = 1$, $p_0 = 0$, and $L_0 = 6$, the method for mapping sub-channels to interlaces and RB sets may be expressed as follows:

- the sub-channel $sc_0^{RP,u}$ corresponds to the interlace $int_2$ and the RB set $rs_0$;

- the sub-channel $sc_1^{RP,u}$ corresponds to the interlace $int_2$ and the RB set $rs_1$;

- the sub-channel $sc_2^{RP,u}$ corresponds to the interlace $int_3$ and the RB set $rs_0$;

- the sub-channel $sc_3^{RP,u}$ corresponds to the interlace $int_3$ and the RB set $rs_1$;

- the sub-channel $sc_4^{RP,u}$ corresponds to the interlace $int_4$ and the RB set $rs_0$;

- the sub-channel $sc_5^{RP,u}$ corresponds to the interlace $int_4$ and the RB set $rs_1$.

As another example, if $L_0$ = 4, then in the above example, mapping is performed only for $sc_0^{RP,u}$, $sc_1^{RP,u}$, $sc_2^{RP,u}$ and $sc_3^{RP,u}$.

In the resource pool $rp_u$, a physical sidelink shared channel (PSSCH) transmission in the slot $t_p'^{RP,u}$ may correspond to one of $M_{freq,code,res}^{PSFCH}$ $(M_{freq,code,res}^{PSFCH} \geq 1)$ physical sidelink feedback channel (PSFCH) resources in the slot $t_{p+N_{Gap}^{PSFCH}}'^{RP,u}$, where $N_{Gap}^{PSFCH}$ may be an integer greater than or equal to $N_{Gap,min}^{PSFCH}$, and $N_{Gap,min}^{PSFCH}$ may be a predefined or configured value (e.g., $N_{Gap,min}^{PSFCH} = 2$). The $M_{freq,code,res}^{PSFCH}$ PSFCH resources may be respectively denoted as $f_0^{RP,u}$, $f_1^{RP,u}$, ..., $f_{M_{freq,code,res}^{PSFCH}-1}^{RP,u}$. For $r \in \left\{0,1,...,M_{freq,code,res}^{PSFCH} - 1\right\}$, the PSFCH resource $f_r^{RP,u}$ may correspond to one or more code-domain resources and/or one or more frequency-domain resources. Hereinafter, unless otherwise specified, it is assumed that $r \in \left\{0,1,...,M_{freq,code,res}^{PSFCH} - 1\right\}$.

The code-domain resource(s) corresponding to the PSFCH resource $f_r^{RP,u}$ may be referred to as a "PSFCH code domain unit". For example, one PSFCH code domain unit may correspond to one cyclic shift pair. Each cyclic shift pair may include two cyclic shifts. For example, one of the cyclic shifts corresponds to acknowledgement (ACK), and the other cyclic shift corresponds to negative acknowledgement (NACK). Specifically, for example, $N_{\text{code,res}}^{\text{PSFCH}}$ PSFCH code domain units may be predefined or configured in the resource pool $rp_u$, and the $N_{\text{code,res}}^{\text{PSFCH}}$ code domain units may be respectively indexed as $0, 1, \ldots, N_{\text{code,res}}^{\text{PSFCH}} - 1$.

The frequency-domain resource(s) corresponding to the PSFCH resource $f_r^{RP,u}$ may be referred to as a "PSFCH frequency domain unit". For example, one PSFCH frequency domain unit may correspond to one or more RBs, or one or more subcarriers in one RB, or one or more RBs, where one or more corresponding subcarriers are present in each RB. Specifically, for example, $M_{\text{freq,res}}^{\text{PSFCH}} \, ( M_{\text{freq,res}}^{\text{PSFCH}} \geq 1 )$ PSFCH frequency domain units may be predefined or configured in the resource pool $rp_u$, where the $M_{\text{freq,res}}^{\text{PSFCH}}$ PSFCH frequency domain units may be respectively indexed as $0, 1, \ldots, M_{\text{freq,res}}^{\text{PSFCH}} - 1$. The PSFCH frequency domain unit indexed as $d \; ( d \in \{0, 1, \ldots, M_{\text{freq,res}}^{\text{PSFCH}} - 1\} )$ may correspond to $M_{\text{PSFCH,freq,d}}^{\text{RB}} \; ( M_{\text{PSFCH,freq,d}}^{\text{RB}} \geq 1 )$ RBs, and a set consisting of the $M_{\text{PSFCH,freq,d}}^{\text{RB}}$ RBs may be denoted as $PB_{PSFCH,freq,d}$. $M_{\text{freq,res}}^{\text{PSFCH}} \cdot M_{\text{PSFCH,freq,d}}^{\text{RB}}$ may be less than or equal to $N_{RP,u}^{RB}$. Hereinafter, unless otherwise specified, it is assumed that $d \in \{0, 1, \ldots, M_{\text{freq,res}}^{\text{PSFCH}} - 1\}$.

For a licensed spectrum, $M_{\text{PSFCH,freq,d}}^{\text{RB}}$ may be equal to 1. Correspondingly, the $M_{\text{freq,res}}^{\text{PSFCH}}$ PSFCH frequency domain units may respectively correspond to $M_{\text{freq,res}}^{\text{PSFCH}}$ predefined or configured RBs. The $M_{\text{freq,res}}^{\text{PSFCH}}$ RBs may be consecutive, or non-consecutive.

For an unlicensed spectrum, the PSFCH frequency domain unit indexed as $d$ may correspond to $N_{RP,u,F}^{INT} ( N_{RP,u,F}^{INT} \geq 1 )$ interlaces and $N_{RP,u,F}^{RBset} \; ( N_{RP,u,F}^{RBset} \geq 1 )$ RB sets, where $N_{RP,u,F}^{INT}$ may be a predefined or configured value, or may be indicated in the SCI, such as $N_{RP,u,F}^{INT} = 1$, or such as $N_{RP,u,F}^{INT} = 2$. The $N_{RP,u,F}^{INT}$ interlaces may be consecutive interlaces or non-consecutive interlaces. A set consisting of the $N_{RP,u,F}^{INT}$ interlaces may be denoted as $I_{RP,u,F,d}^{INT}$. $N_{RP,u,F}^{RBset}$ may be a predefined or configured value, such as $N_{RP,u,F}^{RBset} = 1$, or such as $N_{RP,u,F}^{RBset} = 2$. The $N_{RP,u,F}^{RBset}$ RB sets may be consecutive RB sets or non-consecutive RB sets. A set consisting of the $N_{RP,u,F}^{RBset}$ RB sets may be denoted as $RS_{RP,u,F,d}^{RBset}$.

The set $RB_{PSFCH,freq,d}$ may be equal to $f_{MAP}^{RB} \left( I_{RP,u,F,d}^{INT}, RS_{RP,u,F,d}^{RBset} \right)$.

The number ( $N_{RP,u}^{INT}$ ) of interlaces associated with the resource pool $rp_u$ may be an integral multiple of the number ( $N_{RP,u,F}^{INT}$ ) of interlaces corresponding to each PSFCH frequency domain unit in the resource pool $rp_u$.

The number ( $N_{RP,u}^{RBset}$ ) of RB sets associated with the resource pool $rp_u$ may be an integral multiple of the number ( $N_{RP,u,F}^{RBset}$ ) of RB sets corresponding to each PSFCH frequency domain unit in the resource pool $rp_u$.

For an unlicensed spectrum, $M_{\text{freq,res}}^{\text{PSFCH}}$ may be determined by the number ( $N_{RP,u}^{INT}$ ) of interlaces associated with the resource pool $rp_u$ and/or the number ( $N_{RP,u}^{RBset}$ ) of RB sets associated with the resource pool $rp_u$ and/or the number ( $N_{RP,u,F}^{INT}$ ) of interlaces corresponding to each PSFCH frequency domain unit in the resource pool $rp_u$ and/or the number ( $N_{RP,u,F}^{RBset}$ ) of RB sets corresponding to each PSFCH frequency domain unit in the resource pool $rp_u$. For

example, $$M_{\text{freq,res}}^{\text{PSFCH}} = \left( N_{RP,u}^{INT} / N_{RP,u,F}^{INT} \right) \cdot \left( N_{RP,u}^{RBset} / N_{RP,u,F}^{RBset} \right)$$ , or

$$M_{\text{freq,res}}^{\text{PSFCH}} = \left\lfloor N_{RP,u}^{INT} / N_{RP,u,F}^{INT} \right\rfloor \cdot \left\lfloor N_{RP,u}^{RBset} / N_{RP,u,F}^{RBset} \right\rfloor$$ , or $$M_{\text{freq,res}}^{\text{PSFCH}} = \left( N_{RP,u}^{INT} \cdot N_{RP,u}^{RBset} \right) / \left( N_{RP,u,F}^{INT} \cdot N_{RP,u,F}^{RBset} \right)$$ ,

or $$M_{\text{freq,res}}^{\text{PSFCH}} = \left\lfloor \left( N_{RP,u}^{INT} \cdot N_{RP,u}^{RBset} \right) / \left( N_{RP,u,F}^{INT} \cdot N_{RP,u,F}^{RBset} \right) \right\rfloor$$ .

For an unlicensed spectrum, in the resource pool $rp_u$, the range of the mapping of PSFCH frequency domain units to interlaces and RB sets (i.e., for $d$ = 0, 1, ..., corresponding $I_{RP,u,SC,n}^{INT}$ and $RS_{RP,u,SC,n}^{RBset}$ are sequentially determined for the PSFCH frequency domain unit $d$) may be the interlace set $I_{RP,u,MAP}$ and the set of RB sets $RS_{RP,u,MAP}$.

There may be one or more methods for mapping PSFCH frequency domain units to interlaces and RB sets, such as the mapping method of "first in ascending order of interlace indexes, and then in ascending order of RB set indexes", or such as the mapping method of "first in ascending order of RB set indexes, and then in ascending order of interlace indexes". Optionally, the method for mapping PSFCH frequency domain units to interlaces and RB sets may be determined according to a predefined or configured method, or the mapping method may be indicated in the SCI. For example, the method for mapping PSFCH frequency domain units in the resource pool $rp_u$ to interlaces and RB sets (e.g., "first in ascending order of interlace indexes, and then in ascending order of RB set indexes" or "first in ascending order of RB set indexes, and then in ascending order of interlace indexes") may be determined according to the value of a configured parameter or a field (e.g., referred to as "PSFCH frequency domain unit mapping method") in the SCI.

Specifically, for example, in the mapping method of "first in ascending order of interlace indexes, and then in ascending order of RB set indexes", the set $RS_{RP,u,MAP}$ may be traversed in an outer loop in ascending order of the indexes of elements in the set (i.e., in the set $RS_{RP,u,MAP}$, $N_{RP,u,F}^{RBset}$ RB sets are acquired each time in ascending order of the indexes of the elements), and the set $I_{RP,u,MAP}$ may be traversed in an inner loop in ascending order of the indexes of elements in the set (i.e., in the set $I_{RP,u,MAP}$, $N_{RP,u,F}^{INT}$ interlaces are acquired each time in ascending order of the indexes of the elements). The PSFCH frequency domain unit corresponding to the current $N_{RP,u,F}^{INT}$ interlaces and the current $N_{RP,u,F}^{RBset}$ RB sets is indexed as $d$, and the value of $d$ is increased by 1. The initial value of $d$ may be 0. For example, if $M_{INT}$ = 10, $RS_{RP,u,MAP}$ = {$rs_0$, $rs_1$}, $N_{RP,u,F}^{RBset} = 1$, $I_{RP,u,MAP}$ = {$int_2$, $int_3$, $int_4$}, and $N_{RP,u,F}^{INT} = 1$, then the method for mapping PSFCH frequency domain units to interlaces and RB sets may be expressed as follows:

- the PSFCH frequency domain unit indexed as 0 corresponds to the interlace $int_2$ and the RB set $rs_0$;
- the PSFCH frequency domain unit indexed as 1 corresponds to the interlace $int_3$ and the RB set $rs_0$;
- the PSFCH frequency domain unit indexed as 2 corresponds to the interlace $int_4$ and the RB set $rs_0$;
- the PSFCH frequency domain unit indexed as 3 corresponds to the interlace $int_2$ and the RB set $rs_1$;
- the PSFCH frequency domain unit indexed as 4 corresponds to the interlace $int_3$ and the RB set $rs_1$;
- the PSFCH frequency domain unit indexed as 5 corresponds to the interlace $int_4$ and the RB set $rs_1$.

As another example, in the mapping method of "first in ascending order of RB set indexes, and then in ascending order of interlace indexes", the set $I_{RP,u,MAP}$ may be traversed in an outer loop in ascending order of the indexes of elements in the set (i.e., in the set $I_{RP,u,MAP}$, $N_{RP,u,F}^{INT}$ interlaces are acquired each time in ascending order of the indexes of the elements), and the set $RS_{RP,u,MAP}$ may be traversed in an inner loop in ascending order of the indexes of elements in the set (i.e., in the set $RS_{RP,u,MAP}$, $N_{RP,u,F}^{RBset}$ RB sets are acquired each time in ascending order of the indexes of the elements). The PSFCH frequency domain unit corresponding to the current $N_{RP,u,F}^{INT}$ interlaces and the current $N_{RP,u,F}^{RBset}$ RB sets is indexed as $d$, and the value of $d$ is increased by 1. The initial value of $d$ may be 0. For example, if $M_{INT}$ = 10, $RS_{RP,u,MAP}$ = {$rs_0$, $rs_1$}, $N_{RP,u,F}^{RBset} = 1$, $I_{RP,u,MAP}$ = {$int_2$, $int_3$, $int_4$}, and $N_{RP,u,F}^{INT} = 1$, then the method for mapping PSFCH frequency domain units to interlaces and RB sets may be expressed as follows:

- the PSFCH frequency domain unit indexed as 0 corresponds to the interlace $int_2$ and the RB set $rs_0$;
- the PSFCH frequency domain unit indexed as 1 corresponds to the interlace $int_2$ and the RB set $rs_1$;

- the PSFCH frequency domain unit indexed as 2 corresponds to the interlace $int_3$ and the RB set $rs_0$;
- the PSFCH frequency domain unit indexed as 3 corresponds to the interlace $int_3$ and the RB set $rs_1$;
- the PSFCH frequency domain unit indexed as 4 corresponds to the interlace $int_4$ and the RB set $rs_0$;
- the PSFCH frequency domain unit indexed as 5 corresponds to the interlace $int_4$ and the RB set $rs_1$.

For a licensed spectrum, for a PSSCH transmission, a VRB index $v$ ($v$ = 0, 1, ...) may be mapped to a PRB index $v$.

For an unlicensed spectrum, for a PSSCH transmission, the mapping of VRBs to PRBs may be performed in each RB set separately (e.g., referred to as "intra-RB set mapping"), or the mapping of VRBs to PRBs may be performed across RBs (e.g., referred to as "inter-RB set mapping"). Optionally, a method for mapping VRBs to PRBs in a PSSCH transmission may be determined according to a predefined or configured method, or the mapping method may be indicated in the SCI. For example, the mapping method (e.g., "intra-RB set mapping" or "inter-RB set mapping") is determined according to an RRC parameter (or the value of a field in the SCI).

[Embodiment 1]

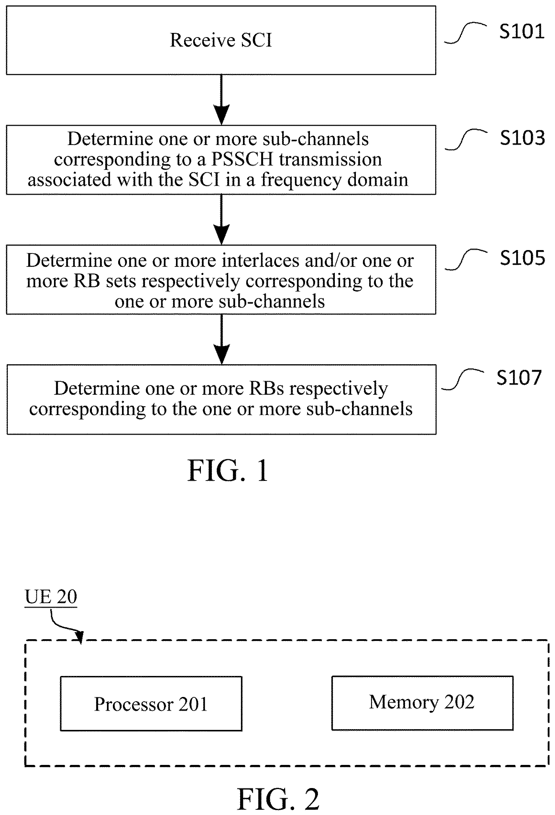

A method performed by user equipment according to Embodiment 1 of the present disclosure will be described below with reference to FIG. 1.

FIG. 1 shows a flowchart corresponding to a method performed by user equipment according to Embodiment 1 of the present disclosure.

As shown in FIG. 1, in Embodiment 1 of the present disclosure, steps performed by the user equipment (UE) include: step S101, step S103, step S105, and step S107.

Specifically, in step S101, SCI is received. For example, the SCI (e.g., including 1st-stage SCI and/or 2nd-stage SCI) is received in a resource pool $rp_u$.

Furthermore, in step S103, one or more sub-channels corresponding to a PSSCH transmission associated with the SCI in a frequency domain are determined, e.g., $L$ consecutive sub-channels starting from a sub-channel $sc_p^{RP,u}$, i.e., $sc_p^{RP,u}, sc_{p+1}^{RP,u}, \ldots, sc_{p+L-1}^{RP,u}$, where $L \in \left\{ 1, 2, \ldots, N_{RP,u}^{SC} \right\}$, and $p \in \left\{ 0, 1, \ldots, N_{RP,u}^{SC} - L \right\}$.

Furthermore, in step S105, one or more interlaces and/or one or more RB sets respectively corresponding to the one or more sub-channels are determined.

For example, whether the mapping of sub-channels to interlaces and RB sets is a semi-static mapping or a dynamic mapping may be determined according to a predefined or configured method or according to an indication in the SCI.

As another example, the range of the mapping of sub-channels to interlaces and RB sets (e.g., the interlace set $I_{RP,u,MAP}$ and/or the set of RB sets $RS_{RP,u,MAP}$) may be determined according to a predefined or configured method or according to an indication in the SCI.

As another example, a method for mapping sub-channels to interlaces and RB sets (e.g., "first in ascending order of interlace indexes, and then in ascending order of RB set indexes" or "first in ascending order of RB set indexes, and then in ascending order of interlace indexes") may be determined according to a predefined or configured method or according to an indication in the SCI.

For the semi-static mapping, the mapping operation may be performed on all sub-channels in the resource pool $rp_u$, and then an interlace set and a set of RB sets respectively corresponding to each sub-channel in a sub-channel subset $\left\{ sc_p^{RP,u}, sc_{p+1}^{RP,u}, \ldots, sc_{p+L-1}^{RP,u} \right\}$ in the mapping operation are determined.

For the dynamic mapping, the mapping operation may be performed on the sub-channel subset $\left\{ sc_p^{RP,u}, sc_{p+1}^{RP,u}, \ldots, sc_{p+L-1}^{RP,u} \right\}$, and an interlace set and a set of RB sets respectively corresponding to each sub-channel in the mapping operation are determined.

Furthermore, in step S107, one or more RBs respectively corresponding to the one or more sub-channels are determined.

For example, for each sub-channel $sc_{p+q}^{RP,u}$ ($q \in \left\{ 0, 1, \ldots, L - 1 \right\}$), a set consisting of RBs corresponding thereto is determined as $f_{MAP}^{RB} \left( I_{RP,u,SC,p+q}^{INT}, RS_{RP,u,SC,p+q}^{RBset} \right)$.

After all RBs corresponding to the $L$ sub-channels are determined, the UE can receive the PSSCH on the RBs.

In this way, according to the description of Embodiment 1, the present disclosure provides a method, in which the mapping of sub-channels to interlaces and RB sets is flexibly determined, thereby maintaining compatibility with a sub-channel-based resource allocation mode in a licensed spectrum and reducing the difficulty of UE implementation, while meeting the restriction on OCB in an unlicensed spectrum.

[Variant Embodiment]

Hereinafter, FIG. 2 is used to illustrate user equipment that can perform the method performed by user equipment described in detail above in the present disclosure as a variant embodiment.

FIG. 2 is a block diagram showing user equipment (UE) according to the present disclosure.

As shown in FIG. 2, user equipment (UE) 20 includes a processor 201 and a memory 202. The processor 201 may include, for example, a microprocessor, a microcontroller, an embedded processor, and the like. The memory 202 may include, for example, a volatile memory (such as a random access memory (RAM)), a hard disk drive (HDD), a non-volatile memory (such as a flash memory), or other memories, etc. The memory 202 has program instructions stored thereon. The instructions, when run by the processor 201, can perform the above method performed by user equipment described in detail in the present disclosure.

The method and related equipment according to the present disclosure have been described above in conjunction with preferred embodiments. It should be understood by those skilled in the art that the method shown above is only exemplary, and the above embodiments can be combined with one another as long as no contradiction arises. The method according to the present disclosure is not limited to steps or sequences shown above. The network node and user equipment shown above may include more modules, for example, modules that may be developed or developed in the future and that may be used for a base station, an Access and Mobility Management Function (AMF), a User Plane Function (UPF), a Mobility Management Entity (MME), a Serving Gateway (S-GW), or UE. Various identifiers shown above are only exemplary, not for limitation, and the present disclosure is not limited to specific information elements serving as examples of these identifiers. A person skilled in the art could make various alterations and modifications according to the teachings of the illustrated embodiments. Those skilled in the art should understand that part or all of the mathematical expressions, mathematical equations, or mathematical inequations may be simplified or transformed or rewritten to some extent, for example, incorporating constant terms, or interchanging two addition terms, or interchanging two multiplication terms, or moving a term from the left side of an equation or inequation to the right side after changing the plus or minus sign thereof, or moving a term from the right side of an equation or inequation to the left side after changing the plus or minus sign thereof, or the like. Mathematical expressions, mathematical equations, or mathematical inequations before and after the simplification or transformation or rewriting may be considered to be equivalent to each other.

It should be understood that the above embodiments of the present disclosure may be implemented through software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present disclosure, the term "base station" may refer to a mobile communication data and/or control switching center having specific transmission power and a specific coverage area, and, for example, having functions such as resource allocation and scheduling, and data reception and transmission. "User equipment" may refer to a user mobile terminal, for example, including terminal devices that can communicate with a base station or a micro base station wirelessly, such as a mobile phone, a laptop computer, and the like.

In addition, the embodiments of the present disclosure disclosed herein may be implemented on a computer program product. More specifically, the computer program product is a product provided with a computer-readable medium having computer program logic encoded thereon. When executed on a computing device, the computer program logic provides related operations to implement the above technical solutions of the present disclosure. When being executed on at least one processor of a computing system, the computer program logic enables the processor to perform the operations (methods) described in the embodiments of the present disclosure. Such an arrangement of the present disclosure is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared database, and so on in one or more modules. Software or firmware or such configuration may be installed on computing equipment such that one or more processors in the computing equipment perform the technical solutions described in the embodiments of the present disclosure.

In addition, each functional module or each feature of the base station device and the terminal device used in each of the above embodiments may be implemented or executed by a circuit, which is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general-purpose processor may be a microprocessor, or the processor may be an existing processor, a controller, a microcontroller, or a state machine. The aforementioned general-purpose processor or each circuit may be configured by a digital circuit or may be configured by a logic circuit. In addition, when an advanced technology that can replace current integrated circuits emerges because of advances in semiconductor technology, the present disclosure may also use integrated circuits obtained using this advanced technology.

Although the present disclosure has been shown in connection with the preferred embodiments disclosed herein, it will be understood by those skilled in the art that various modifications, substitutions, and alterations may be made therein without departing from the spirit and scope of the present disclosure. Accordingly, the present disclosure should not be defined by the above-described embodiments, but should be defined by the appended claims and their equivalents.

## Claims

1.   A method performed by user equipment (UE), **characterized by** comprising:

receiving SCI; and
determining, from a resource pool, one or more sub-channels for a PSSCH transmission associated with the SCI, wherein

the resource pool is associated with $N_{RP,u}^{RBset}$ consecutive RB sets and $N_{RP,u}^{INT}$ consecutive interlaces, and

in the resource pool, each sub-channel is mapped to one of the $N_{RP,u}^{RBset}$ RB sets and $N_{RP,u,SC}^{INT}$ consecutive interlaces among the $N_{RP,u}^{INT}$ interlaces, and

among all sub-channels mapped to one RB set, starting from a lowest indexed interlace among the $N_{RP,u}^{INT}$ interlaces, each sub-channel is sequentially mapped to the next $N_{RP,u,SC}^{INT}$ interlaces among the $N_{RP,u}^{INT}$ interlaces in ascending order of interlace indexes, wherein

$N_{RP,u}^{RBset}$, $N_{RP,u}^{INT}$, and $N_{RP,u,SC}^{INT}$ each correspond to a configured or pre-configured parameter.

2.   User equipment, comprising:

a processor; and
a memory, having instructions stored therein,
wherein the instructions, when run by the processor, perform the method according to claim 1.

Receive SCI $\qquad$ S101

Determine one or more sub-channels corresponding to a PSSCH transmission associated with the SCI in a frequency domain $\qquad$ S103

Determine one or more interlaces and/or one or more RB sets respectively corresponding to the one or more sub-channels $\qquad$ S105

Determine one or more RBs respectively corresponding to the one or more sub-channels $\qquad$ S107

## FIG. 1

UE 20

Processor 201          Memory 202

## FIG. 2

**INTERNATIONAL SEARCH REPORT**

| International application No. |
|---|
| **PCT/CN2023/090580** |

**A. CLASSIFICATION OF SUBJECT MATTER**

H04W72/04(2023.01)i; H04W72/40(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; VEN; ENTXTC; CNKI; 3GPP: 侧行控制信息, 物理侧行共享信道, 物理直行共享信道, 资源池, 子信道, 资源块, 交织, 编号, 递增, SCI, PSSCH, resource pool, sub?channel, RB, interlace, increment, number

**C. DOCUMENTS CONSIDERED TO BE RELEVANT**

| Category* | Citation of document, with indication, where appropriate, of the relevant passages | Relevant to claim No. |
|---|---|---|
| Y | CN 110149698 A (ZTE CORP.) 20 August 2019 (2019-08-20)<br>description, paragraphs [0004]-[0006] | 1, 2 |
| Y | WO 2021203326 A1 (QUALCOMM INCORPORATED) 14 October 2021 (2021-10-14)<br>description, paragraphs [0119]-[0150] | 1, 2 |
| A | CN 114365570 A (QUALCOMM INC.) 15 April 2022 (2022-04-15)<br>entire document | 1, 2 |
| A | WO 2020221241 A1 (SHARP CORPORATION et al.) 05 November 2020 (2020-11-05)<br>entire document | 1, 2 |
| A | WO 2021189394 A1 (LENOVO BEIJING LTD.) 30 September 2021 (2021-09-30)<br>entire document | 1, 2 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2023** | **12 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><b>INTERNATIONAL SEARCH REPORT</b><br>Information on patent family members</td><td colspan="2">International application No.<br><b>PCT/CN2023/090580</b></td></tr>
</table>

| Patent document<br>cited in search report | Publication date<br>(day/month/year) | Patent family member(s) | Publication date<br>(day/month/year) |
|---|---|---|---|
| CN 110149698 A | 20 August 2019 | None | |
| WO 2021203326 A1 | 14 October 2021 | None | |
| CN 114365570 A | 15 April 2022 | None | |
| WO 2020221241 A1 | 05 November 2020 | None | |
| WO 2021189394 A1 | 30 September 2021 | None | |

Form PCT/ISA/210 (patent family annex) (July 2022)

**EP 4 518 492 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New WI proposal: Support for V2V services based on LTE sidelink. *RP-152293*
- New WID on 3GPP V2X Phase 2. *RP-170798*
- New WID on New Radio Access Technology. *RP-170855*
- New WID on 5G V2X with NR sidelink. *RP-190766*
- WID revision: NR sidelink enhancement. *RP-201385*
- New WID on NR sidelink evolution. *RP-213678*